# FASCICULE DE BREVET EUROPEEN

(11) **EP 1 648 651 B1**
(45) Date de publication et mention de la délivrance du brevet: **08.01.2014**
(21) Numéro de dépôt: 04767681.2
(22) Date de dépôt: 15.07.2004
(51) Int. Cl.: B23K 31/02

(54) **PROCÉDÉ DE BRASAGE D'UN ALLIAGE TI-AL, AINSI QUE L'OBJET OBTENU PAR UN TEL PROCÉDÉ**
VERFAHREN ZUM LÖTEN EINER TI-AL LEGIERUNG UND HERGESTELLTES WERKSTÜCK DAVON
TI-AL ALLOY BRAZING METHOD AND OBJECT OBTAINED BY SUCH METHOD

(30) Priorité: 25.07.2003 FR 0309154
(43) Date de publication de la demande: 26.04.2006
(73) Titulaire: ONERA (Office National d'Etudes et de Recherches Aérospatiales), 92320 Châtillon (FR)
(72) Inventeur: HOFFMANN, Carine, F-75017 PARIS (FR); BACOS, Marie-Pierre, F-92160 Antony (FR); JOSSO, Pierre, F-92130 Issy-les-Moulineaux (FR); NAVEOS, Serge, F-92290 Chatenay-Malabry (FR)
(74) Mandataire: Bezault, Jean
(86) Numéro de dépôt international: PCT/FR2004/001854
(87) Numéro de publication internationale: WO 2005/018867

(56) Documents cités:
- EP-A- 0 502 426
- US-A- 4 869 421
- US-A- 5 525 779
- US-B1- 6 291 086

## Description

L'invention concerne un procédé pour fixer à la surface d'une première pièce en un premier matériau intermétallique un second matériau métallique en faisant fondre une brasure adaptée au second matériau, le premier matériau étant un alliage intermétallique Ti-Al ainsi qu'un objet fabriqué par un tel procédé. US 2 906 008 A décrit un procédé pour fixer à la surface d'une première pièce une seconde pièce, ainsi que l'objet fabriqué par un tel procédé.

L'alliage intermétallique γ-TiAl présente l'avantage, par rapport à d'autres alliages à base de titane, tels que l'alliage connu sous la dénomination TA6V, et aux alliages à base de nickel, utilisés habituellement pour fabriquer des composants de moteurs aéronautiques, de posséder une faible masse volumique, pour une résistance mécanique comparable à celle des aciers et des alliages de nickel précités, ce qui permet une réduction importante de la masse embarquée et donc de la consommation spécifique.

Cependant, les alliages intermétalliques de type TiAl ne peuvent être vissés, boulonnés ou rivetés sans risque de fissuration car ils sont fragiles à froid. Il est donc nécessaire d'utiliser une autre technique de liaison, à savoir collage, soudage ou brasage. Les assemblages collés ne peuvent être utilisés à des températures supérieures à 150 °C. Le soudage exige une compatibilité entre les matériaux à souder, qui n'existent pas par exemple entre les alliages à base de titane et les alliages à base de nickel, de cobalt et/ou de fer. Quant au brasage de ces mêmes matériaux, il se heurte à des difficultés du fait que le titane forme avec le nickel, le cobalt et le fer des eutectiques à bas points de fusion. Il est donc nécessaire d'avoir recours au brasage-diffusion.

US 4 869 421 A et EP 0 904 881 A décrivent des procédés de brasage limités à la liaison de deux pièces en aluminiure de titane. US 5 318 214 A décrit un procédé de brasage appliqué notamment à l'assemblage d'une pièce en Ti₃Al et d'une pièce en alliage de nickel commercialisé sous la dénomination Hastelloy X. Cependant, les présents inventeurs n'ont pas été en mesure d'obtenir une liaison en reproduisant le mode opératoire décrit dans ce document, Ti₃Al étant remplacé par γ-TiAl.

Le but de l'invention est de réaliser une liaison par brasage entre un premier matériau intermétallique qui est un alliage Ti-Al quelconque et un second matériau métallique qui peut être notamment un alliage de nickel, de cobalt, de fer ou de titane.

L'invention vise notamment un procédé du genre défini en introduction, et prévoit qu'on interpose une couche de nickel entre ladite première pièce et la brasure.

Des caractéristiques optionnelles de l'invention, complémentaires ou de substitution, sont énoncées ci-après:
- Le second matériau est sous forme d'une seconde pièce préexistante et dans lequel on presse la couche de nickel et la brasure entre les première et seconde pièces.
- Le second matériau est sous forme d'un revêtement qu'on applique sur l'ensemble formé par la première pièce, la couche de nickel et la brasure.
- La couche de nickel est sous forme d'une feuille préexistante.
- La couche de nickel est sous forme d'un revêtement.
- Le revêtement de nickel est déposé par voie électrolytique.
- La couche de nickel a une épaisseur d'au moins 30 µm et de préférence d'au moins 40 µm.
- Le second matériau est un alliage à base de nickel.
- On porte l'ensemble à traiter à une température supérieure à la température de fusion de la brasure pendant au moins dix minutes sous vide.
- On opère sous une pression résiduelle inférieure à 10⁻³ Pa.

L'invention a également pour objet une pièce métallique composite telle qu'on peut l'obtenir par le procédé tel que défini ci-dessus, comprenant un substrat en un alliage intermétallique Ti-Al, recouvert d'une multiplicité de couches successives, à savoir une première couche contenant les phases α2-Ti₃Al, τ2-Ti₂AlNi et τ3-TiAlNi, des seconde, troisième et quatrième couches formées respectivement des phases τ4-TiAlNi₂ et γ'-Ni₃Al et de nickel, et une cinquième couche de brasure reliant la quatrième couche à un autre matériau métallique.

La pièce selon l'invention peut comporter au moins certaines des particularités suivantes:
- Ladite première couche contient des îlots de α2-Ti₃Al dispersés dans une matrice polyphasée comprenant τ2-Ti₂AlNi et τ3-TiAlNi.
- Ladite première couche comprend une première sous-couche de α2-Ti₃Al et une seconde sous-couche polyphasée comprenant τ2-Ti₂AlNi et τ3-TiAlNi.
- Ladite première couche comprend une première sous-couche de α2-Ti₃Al, une seconde sous-couche de τ2-Ti₂AlNi et une troisième sous-couche de τ3-TiAlNi.
- Ledit autre matériau métallique est un alliage à base de nickel.

Les caractéristiques et avantages de l'invention sont exposés plus en détail dans la description ci-après, avec référence aux dessins annexés.

La figure 1 est une vue en coupe schématique montrant deux pièces métalliques à assembler entre lesquelles sont interposées deux feuilles métalliques utilisées pour l'assemblage par le procédé selon l'invention.

La figure 2 est une vue analogue à la figure 1, montrant l'assemblage obtenu par le procédé selon l'invention.

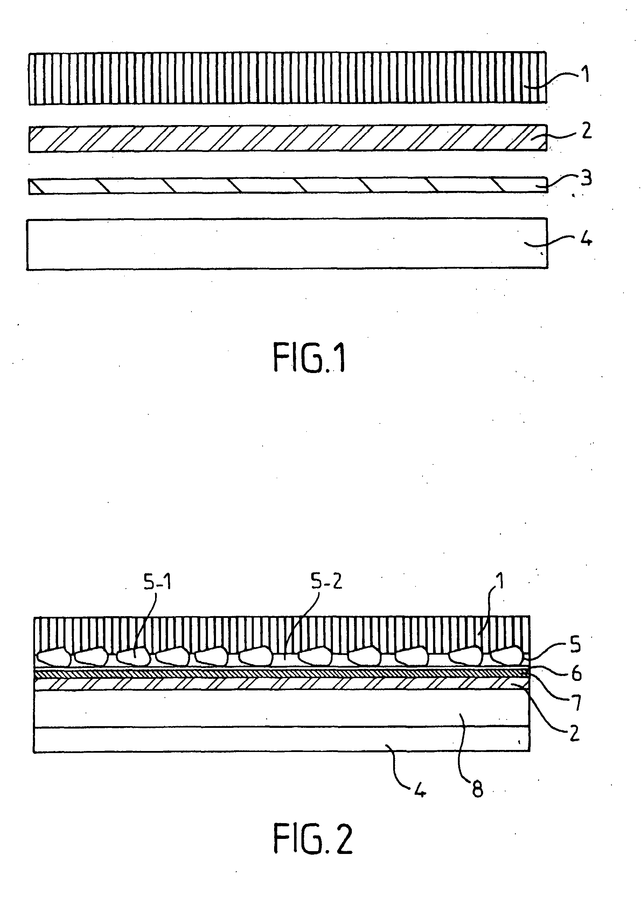

Les deux pièces à assembler représentées sur la figure 1 sont une pièce 1 en aluminiure de titane et une pièce 4 en alliage à base de nickel. Selon l'invention, on dépose la pièce 1 sur un clinquant de nickel 2 dont l'épaisseur est de préférence d'au moins 40 µm. L'ensemble est ensuite déposé sur un feuillard 3 d'une brasure classique qui peut être par exemple l'un des alliages connus sous les désignations TiCuNi 70, TiNi 67 et MBF 1006, ou du borure de nickel BNi₃ ou l'eutectique argent-cuivre, et le tout est déposé sur la pièce 4. On place l'empilement obtenu dans un four sous vide d'air dont la pression résiduelle est inférieure à 10⁻³ Pa et on chauffe à une température supérieure au point de fusion de la brasure 3. Pour améliorer la qualité du joint brasé, on peut soumettre l'empilement à une légère compression. Une durée du palier de température d'environ une heure permet d'obtenir une solidification de la brasure par diffusion de ses constituants dans les autres couches (solidification isotherme), conduisant à la structure représentée sur la figure 2.

Sur la figure 2, une couche d'interdiffusion 5 adjacente au substrat d'aluminiure de titane 1 est formée d'îlots de α2-Ti₃Al 5-1 dispersés dans une matrice polyphasée 5-2 contenant les phases τ2-Ti₂AlNi et τ3-TiAlNi. La couche 5 est suivie d'une couche continue 6 de la phase τ4-TiAlNi₂ puis d'une couche continue 7 de γ'-Ni₃Al, elle-même adjacente à la couche 2 de nickel pur. Entre cette dernière et la pièce 4 est interposée une couche 8 résultant de la diffusion des éléments de la brasure dans la couche 2 et dans la pièce 4.

### Exemple 1

Cet exemple illustre le brasage d'une pièce en alliage γ-TiAl et d'une pièce en un alliage de nickel commercialisé sous la dénomination Nimonic 75. Pour ce faire, on insère une feuille de nickel de 60 µm d'épaisseur entre une brasure de TiCuNi et la pièce en aluminiure de titane, la pièce en alliage de nickel étant directement au contact de la brasure. L'ensemble est porté, sous une pression de 5 kPa, à une température de 1050 °C sous un vide meilleur de 10⁻³ Pa pendant deux heures. À l'interface TiAl/nickel, de l'aluminium migre depuis TiAl vers le nickel. Il se forme ainsi quatre couches contenant respectivement 35 %, 39 %, 26 % et 13 % d'aluminium en atomes. Il en résulte un ensemble stable et exempt de fissures. Le titane ne semble pas avoir diffusé vers la brasure, sa teneur étant de 60 % en atomes à l'interface TiAl/Ni.

La feuille de nickel évite la diffusion de l'aluminium vers l'alliage de nickel. La brasure présente des précipités peu nombreux répartis de façon non homogène. Elle est constituée de plusieurs phases de compositions différentes, enchevêtrées les unes dans les autres, à savoir :
- une phase gris foncé de composition atomique Ti 54 %, Ni 30 %, Cr 10 % ;
- une phase gris clair et une phase blanche, de compositions respectives Ni 45,5 %, Ti 38 % et Ni 62,5 %, Ti 26 %, correspondant aux phases TiNi et Ti₃Ni du diagramme binaire Ti-Ni ; et
- une phase noire de composition Ti 87 %, Ni 9 % (β-Ti).

Du nickel diffuse de l'alliage de nickel vers la brasure, comme le montre la présence de précipités de chrome pur à l'endroit de l'interface initiale. Une phase est également présente contenant du nickel, du titane et du chrome (αTi + η-Ni₃Ti + γ-NiCr), le titane pouvant provenir soit de la brasure, soit du TiAl, vraisemblablement de ce dernier, la zone de fusion de la brasure étant appauvrie en titane. Le brasage fait appel aux réactions suivantes :
du côté de l'aluminiure de titane

   3TiAl → Ti₃Al + 2Al
et du côté de l'alliage de nickel

   6Ni + 2Al → 2Ni₃Al
soit la réaction globale

   3TiAl + 6Ni → Ti₃Al + 2Ni₃Al.

Le gradient de concentration en titane qui en résulte se manifeste par la présence de différents composés définis le long du chemin de diffusion, constituant les couches 5 à 7 décrites plus haut en relation avec la figure 2. On est en présence d'un équilibre thermodynamique.

Des échantillons brasés ont été vieillis sous argon à 800 °C pendant 150 heures. La structure de l'interface alliage de nickel/brasure reste inchangée. La distance entre l'alliage et la feuille de nickel diminue de 120 à 75 µm. Le front de diffusion du nickel a donc progressé. L'interface TiAl/nickel ne s'est pas déplacée, ce qui montre que la feuille de nickel arrête efficacement la diffusion de l'aluminium. L'homogénéité de la brasure est augmentée par le vieillissement.

Aucune évolution de l'interface alliage de nickel/brasure n'est constatée lorsque la durée de vieillissement est portée à 300 heures. La phase Ti-Ni-Cr, déjà réduite après 150 heures, est alors totalement redissoute dans sa matrice. Il ne reste donc dans la matrice Ni₃Ti que des précipités de chrome.

Des essais mécaniques de cisaillements ont donné des valeurs de résistance τ = 221,4 ± 7,5 MPa. Un examen métallographique après essai montre que les pièces brasées ne sont pas désolidarisées, mais que la fissuration produite a été déviée, de sorte qu'elle ne rendrait pas inutilisable un objet industriel obtenu selon cet exemple. Ceci indique que la couche de nickel joue le rôle d'un amortisseur qui absorbe les contraintes thermomécaniques (par exemple dilatation) ou purement mécanique (cisaillement, fatigue).

Le remplacement de la brasure TiCuNi par un ruban de TiNi 67 conduit à une liaison ayant sensiblement la même structure.

### Exemple 2

On procède comme dans l'exemple 1 en remplaçant la feuille de nickel par un dépôt électrolytique de nickel. Pour ce faire, on fait subir à l'aluminiure de titane un prétraitement par sablage suivi d'une activation dans une solution aqueuse contenant 40 % d'acide nitrique et 3, 6 % d'acide fluorhydrique en masse. Le dépôt est effectué dans une solution de sulfamate de nickel bain mort prêt à l'emploi commercialisé par la Société Frappaz-Imaza, à une température de 45 °C et sous une densité de courant de 3 A/dm². Des essais préliminaires ayant montré que l'épaisseur de nickel devaient être au moins de 30 µm, on a choisi une valeur de 40 µm.

À l'issue du traitement de brasage, on obtient la même succession de couches que dans l'exemple 1, quelle que soit la brasure utilisée, TiCuNi 70 ou TiNi 67.

### Exemple 3

En procédant comme dans l'exemple 2, on dépose une couche de nickel d'une épaisseur d'environ 50 µm sur une pièce en un alliage de nickel commercialisé sous la dénomination Hastelloy X. On utilise comme brasure l'eutectique argent-cuivre dont le point de fusion est 790 °C. Les points de fusion des différents eutectiques qui peuvent se former avec le titane sont les suivants : Ag-Ti 960 °C, fusion non eutectique, CuTi 885 °C et 960 °C, NiTi 942 °C. La feuille de brasure est interposée entre le revêtement de nickel et une pièce en γ-TiAl et l'ensemble est porté à une température de 820 °C, inférieure de 65 °C au plus bas des points de fusion ci-dessus, sous une pression mécanique de 5 kPa et un vide meilleur que 10⁻³ Pa pendant une heure. À l'issue de ce traitement, l'examen métallographique montre une liaison parfaite présentant les mêmes couches contenant Ti et Al que précédemment, et, en contact avec l'alliage de nickel, une couche de AgCu suivie d'une couche de NiCuAg. Si on remplace la brasure Ag-Cu par de l'argent pur, avec une pression d'accostage d'environ 1 MPa, la couche adjacente à l'alliage de nickel et de l'argent, suivie d'une couche de γ-Ni.

Dans les deux cas, la couche de nickel, en équilibre thermodynamique avec l'aluminiure de nickel, agit en absorbant les contraintes mécaniques comme indiqué plus haut.

### Exemple 4

Cet exemple concerne le brasage de γ-TiAl avec un alliage de nickel commercialisé sous la dénomination N 18, et vise à résoudre le problème difficile, compte tenu de la fragilité à froid des alliages de type γ-TiAl, de la fixation des aubes mobiles de compresseurs de turbines aéronautiques sur des disques en alliage N 18, ce dernier étant un alliage à base de nickel contenant en masse 15,5 % de cobalt, 11,5 % de chrome, 6,5 % de molybdène, 4,3 % d'aluminium, 4,3 % de titane et des traces de zirconium, de carbone, de bore et de hafnium.

On procède comme dans l'exemple 2 en remplaçant l'alliage Nimonic 75 par l'alliage N 18 et en utilisant comme brasure TiNi 67. À l'issue de ce traitement, l'interface TiAl/Ni est semblable à celle obtenue dans les exemples précédents. La zone de diffusion entre l'alliage de nickel et la brasure est composée de précipités de titane et de phase chrome-molybdène. L'assemblage peut fonctionner à des températures de 800 °C pendant plus de 300 heures.

### Exemple 5

Cet exemple illustre la formation sur une pièce en γ-TiAl d'une barrière de protection contre l'oxydation et la corrosion à chaud.

On réalise un revêtement de nickel sur un échantillon de γ-TiAl comme décrit dans l'exemple 2, et on recouvre ce revêtement d'une feuille de brasure TiNi 67, puis d'une feuille d'une épaisseur de 0,1 mm obtenue par frittage à partir d'un alliage de type MCrAlY disponible sous la dénomination AMDRY 997, qui est un alliage à base de nickel contenant en masse 23 % de cobalt, 20 % de chrome, 8,5 % d'aluminium, 4 % de tantale et 0,6 % d'yttrium. Un traitement thermique sous vide est effectué comme décrit dans l'exemple 2. À l'issue de ce traitement, l'examen métallographique montre une liaison parfaite présentant la séquence de couches déjà décrite du substrat TiAl jusqu'à la feuille de nickel. La feuille de MCrAlY est fortement adhérente et peut ainsi assurer une protection contre l'oxydation et la corrosion à chaud, notamment en présence de phases condensées ou non contenant du chlore.

En variante, l'alliage MCrAlY, au lieu d'être appliqué sous forme d'une feuille, peut être projeté au moyen d'une torche à plasma comme connu en soi.

## Revendications

1. Procédé pour fixer à la surface d'une première pièce (1) en un premier matériau métallique un second matériau métallique (4) en faisant fondre une brasure (3) adaptée au second matériau, **caractérisé en ce qu'**on interpose une couche de nickel (2) entre ladite première pièce (1) et la brasure (3), et **en ce que** le premier matériau est un alliage intermétallique Ti-Al.

2. Procédé selon la revendication 1, dans lequel le second matériau est sous forme d'une seconde pièce préexistante (4) et dans lequel on presse la couche de nickel (2) et la brasure (3) entre les première et seconde pièces (1, 4).

3. Procédé selon la revendication 1, dans lequel le second matériau (4) est sous forme d'un revêtement qu'on applique sur l'ensemble formé par la première pièce, la couche de nickel et la brasure.

4. Procédé selon l'une des revendications précédentes, dans lequel la couche de nickel est sous forme d'une feuille préexistante (2).

5. Procédé selon l'une des revendications 1 à 3, dans lequel la couche de nickel est sous forme d'un revêtement.

6. Procédé selon la revendication 5, dans lequel le revêtement de nickel est déposé par voie électrolytique.

7. Procédé selon l'une des revendications précédentes, dans lequel la couche de nickel (2) a une épaisseur d'au moins 30 µm et de préférence d'au moins 40 µm.

8. Procédé selon l'une des revendications précédentes, dans lequel le second matériau (4) est un alliage à base de nickel.

9. Procédé selon l'une des revendications précédentes, dans lequel on porte l'ensemble à traiter à une température supérieure à la température de fusion de la brasure pendant au moins dix minutes sous vide.

10. Procédé selon la revendication 9, dans lequel on opère sous une pression résiduelle inférieure à 10⁻³ Pa.

11. Pièce métallique composite telle qu'on peut l'obtenir par le procédé selon l'une des revendications précédentes, comprenant un substrat (1) en un alliage intermétallique Ti-Al, recouvert d'une multiplicité de couches successives, à savoir une première couche (5) contenant les phases α2-Ti₃Al, τ2-Ti₂AlNi et τ3-TiAlNi, des seconde, troisième et quatrième couches (6, 7, 2) formées respectivement des phases τ4-TiAlNi₂ et γ'-Ni₃Al et de nickel, et une cinquième couche (8) de brasure reliant la quatrième couche (2) à un autre matériau métallique (4).

12. Pièce selon la revendication 11, dans laquelle ladite première couche (5) contient des îlots (5-1) de α2-Ti₃Al dispersés dans une matrice polyphasée (5-2) comprenant τ2-Ti₂AlNi et τ3-TiAlNi.

13. Pièce selon la revendication 11, dans laquelle ladite première couche comprend une première sous-couche de α2-Ti₃Al et une seconde sous-couche polyphasée comprenant τ2-Ti₂AlNi et τ3-TiAlNi.

14. Pièce selon la revendication 11, dans laquelle ladite première couche comprend une première sous-couche de α2-Ti₃Al, une seconde sous-couche de τ2-Ti₂AlNi et une troisième sous-couche de τ3-TiAlNi.

15. Pièce selon l'une des revendications 11 à 14, dans laquelle ledit autre matériau métallique (4) est un alliage à base de nickel.

## Patentansprüche

1. Verfahren, um an der Oberfläche eines ersten Teils (1) aus einem ersten Metallwerkstoff einen zweiten Metallwerkstoff (4) zu befestigen, indem ein an den zweiten Werkstoff angepasstes Lötmittel (3) zum Schmelzen gebracht wird, **dadurch gekennzeichnet, dass** eine Nickelschicht (2) zwischen dem ersten Teil (1) und dem Lötmittel (3) eingebracht wird, und dass der erste Werkstoff eine intermetallische Ti-Al-Legierung ist.

2. Verfahren nach Anspruch 1, wobei der zweite Werkstoff in Form eines bereits bestehenden zweiten Teils (4) vorliegt, und wobei die Nickelschicht (2) und das Lötmittel (3) zwischen dem ersten und zweiten Teil (1, 4) verpresst werden.

3. Verfahren nach Anspruch 1, wobei der zweite Werkstoff (4) in Form einer Beschichtung vorliegt, die auf die durch das erste Teil, die Nickelschicht und das Lötmittel gebildete Einheit aufgebracht wird.

4. Verfahren nach einem der vorhergehenden Ansprüche, wobei die Nickelschicht in Form einer bereits bestehenden Folie (2) vorliegt.

5. Verfahren nach einem der Ansprüche 1 bis 3, wobei die Nickelschicht in Form einer Beschichtung vorliegt.

6. Verfahren nach Anspruch 5, wobei die Nickelbeschichtung auf elektrolytischem Wege abgeschieden wird.

7. Verfahren nach einem der vorhergehenden Ansprüche, wobei die Nickelschicht (2) eine Dicke von mindestens 30 µm und vorzugsweise mindestens 40 µm hat.

8. Verfahren nach einem der vorhergehenden Ansprüche, wobei der zweite Werkstoff (4) eine Legierung auf Basis von Nickel ist.

9. Verfahren nach einem der vorhergehenden Ansprüche, wobei die zu verarbeitende Einheit während mindestens zehn Minuten unter Vakuum auf eine Temperatur gebracht wird, die höher ist als die Schmelztemperatur des Lötmittels.

10. Verfahren nach Anspruch 9, wobei unter einem Restdruck von unter 10⁻³ Pa gearbeitet wird.

11. Verbundmetallteil, wie es sich durch das Verfahren nach einem der vorhergehenden Ansprüche erhalten lässt, ein Substrat (1) aus einer intermetallischen Ti-Al-Legierung umfassend, das mit mehreren aufeinanderfolgenden Schichten beschichtet ist, und zwar einer ersten Schicht (5), welche die Phasen α2-Ti₃Al, τ2-Ti₂AlNi und τ3-TiAlNi enthält, einer zweiten, dritten und vierten Schicht (6, 7, 2), die jeweils aus den Phasen τ4-TiAlNi₂ und γ'-Ni₃Al und aus Nickel gebildet sind, und einer fünften Schicht (8) aus Lötmittel, welche die vierte Schicht (2) mit einem anderen Metallwerkstoff (4) verbindet.

12. Teil nach Anspruch 11, wobei die erste Schicht (5) kleine Inseln (5-1) aus α2-Ti₃Al enthält, die in einer mehrphasigen Matrix (5-2) verstreut sind, die τ2-Ti₂AlNi und τ3-TiAlNi umfasst.

13. Teil nach Anspruch 11, wobei die erste Schicht eine erste Unterschicht aus α2-Ti₃Al und eine zweite, mehrphasige Unterschicht umfasst, die τ2-Ti₂AlNi und τ3-TiAlNi umfasst.

14. Teil nach Anspruch 11, wobei die erste Schicht eine erste Unterschicht aus α2-Ti₃Al, eine zweite, Unterschicht aus τ2-Ti₂AlNi und eine dritte Unterschicht aus τ3-TiAlNi umfasst.

15. Teil nach einem der Ansprüche 11 bis 14, wobei der andere Metallwerkstoff (4) eine Legierung auf Basis von Nickel ist.

## Claims

1. Method of fixing to the surface of a first part (1) composed of a metal material a second metal material (4) by melting a brazing alloy (3) adapted to the second material, **characterised in that** a layer of nickel (2) is interposed between the first part (1) and the brazing alloy (3), and **in that** the first material is composed of an intermetallic Ti-Al alloy.

2. Method according to claim 1, wherein the second material is in the form of a second preformed part (4) and wherein the layer of nickel (2) and the brazing alloy (3) are pressed between the first and second parts (1, 4).

3. Method according to claim 1, wherein the second material (4) is in the form of a coating which is applied to the assembly formed by the first part, the layer of nickel and the brazing alloy.

4. Method according to one of the preceding claims, wherein the layer of nickel is in the form of a preformed sheet (2).

5. Method according to one of claims 1 to 3, wherein the layer of nickel is in the form of a covering.

6. Method according to claim 5, wherein the covering of nickel is deposited by electrolytic means.

7. Method according to one of the preceding claims, wherein the layer of nickel (2) has a thickness of at least 30 µm and preferably of at least 40 µm.

8. Method according to one of the preceding claims, wherein the second material (4) is a nickel-based alloy.

9. Method according to one of the preceding claims, wherein the whole to be treated is brought to a temperature higher than the melting temperature of the brazing alloy for at least 10 minutes in a vacuum.

10. Method according to claim 9, wherein the method is carried out under a residual pressure of less than 10⁻³ Pa.

11. Composite metal part such as can be obtained by the method according to one of the preceding claims, comprising a substrate (1) composed of an intermetallic Ti-Al alloy, covered with a plurality of successive layers, notably a first layer (5) containing the phases α2-Ti₃Al, τ2-Ti₂AlNi and τ3-TiAlNi, second, third and fourth layers (6, 7, 2) formed respectively of the phases τ4-TiAlNi₂ and γ'-Ni₃Al and of nickel, and a fifth layer (8) of brazing alloy connecting the fourth layer (2) to another metal material (4).

12. Part according to claim 11, wherein the first layer (5) contains islets (5-1) of α2-Ti3Al dispersed in a polyphase matrix (5-2) comprising τ2-Ti₂AlNi and τ3-TiAlNi.

13. Part according to claim 11, wherein the first layer comprises a first sub-layer of α2-Ti₃Al and a second polyphase sub-layer comprising τ2-Ti₂AlNi and τ3-TiAlNi.

14. Part according to claim 11, wherein the first layer comprises a first sub-layer of α2-Ti₃Al, a second sub-layer of τ2-Ti₂AlNi and a third sub-layer of τ3-TiAlNi.

15. Part according to any of claims 11 to 14, wherein the said other metal material (4) is a nickel-based alloy.
